# EUROPEAN PATENT APPLICATION

(11) **EP 3 943 551 A1**
(43) Date of publication of application: **26.01.2022**
(21) Application number: 20187591.1
(22) Date of filing: 24.07.2020
(51) Int. Cl.: C08L 67/02, C08L 23/08, C08K 7/14

(54) **THERMOPLASTIC COMPOSITIONS HAVING LOW DIELECTRIC PROPERTIES AND GOOD MECHANICAL PERFORMANCE**

(71) Applicant: SHPP Global Technologies B.V., 4612 PX Bergen op Zoom (NL)
(72) Inventor: WANG, Jian, Pudong, Shanghai (CN); HE, Fei Yun, Pudong, Shanghai (CN); ZHENG, Yun, Pudong, Shanghai (CN); KUNG, Edward, Selkirk, NY New York 12158 (US)
(74) Representative: Dehns

(57) **Abstract**

Thermoplastic compositions include: (a) from about 40 wt% to about 90 wt% of a polymer resin including poly(cyclohexylenedimethylene terephthalate) (PCT) or a copolymer thereof; (b) from about 20 wt% to about 50 wt% of a reinforcing filler including glass fiber; and (c) from about 1 wt% to about 20 wt% of an impact modifier comprising a di-block copolymer. The thermoplastic compositions are useful in consumer electronics (CE) articles, including a mobile phone or tablet, and specifically an antenna split for a mobile phone or tablet.

## Description

### FIELD OF THE DISCLOSURE

The present disclosure relates to thermoplastic compositions suitable for use in nano molding technology (NMT) applications, and in particular to compositions including poly(cyclohexylenedimethylene terephthalate) (PCT) or a copolymer thereof, a reinforcing filler and an impact modifier including a di-block copolymer.

### BACKGROUND OF THE DISCLOSURE

Nano molding technology (NMT) is a technology in which plastic resins are integrated with metal through a convenient injection molding process. NMT provides features such as excellent metal bonding reliability, high productivity and good cost efficiency. As a result NMT products are now widely used in the consumer electronics (CE) industry, especially in cellular phone and tablet technologies. Specifically, NMT components are incorporated into antenna split materials as they provide improved waterproof performance and antenna efficiency. Polyphenylene sulfide (PPS), polybutylene terephthalate (PBT), polyethylene terephthalate (PET), and polyamide (PA) have been used as base resins in NMT processes. With balanced performance, such as bonding strength, colorability and color stability (chemical resistance), PBT has become the dominant base resin in the NMT market.

Cellular phone providers are now incorporating 5G (fifth generation) technology. The high working frequency of the 5G network requires new and distinct requirements on NMT materials. Generally, materials with low dielectric constant (Dk) & low dissipation factor (Df) are preferred solutions due to the benefit to antenna performance. However, because of the relatively high Dk and Df values of PBT base resin, it is challenging to develop PBT-based NMT solutions with low Dk (e.g. Dk < 3) and low Df (*e.g*., Df < 0.008) properties and that also have good mechanical performance (*e.g*., modulus and impact strength).

These and other shortcomings are addressed by aspects of the present disclosure.

### SUMMARY

Aspects of the disclosure relate to thermoplastic compositions including: (a) from about 40 wt% to about 90 wt% of a polymer resin including PCT or a copolymer thereof; (b) from about 20 wt% to about 50 wt% of a reinforcing filler including glass fiber; and (c) from about 1 wt% to about 20 wt% of an impact modifier comprising a di-block copolymer. The thermoplastic compositions are useful in consumer electronics (CE) articles, including a mobile phone or tablet, and specifically an antenna split for a mobile phone or tablet.

### DETAILED DESCRIPTION

To address the problems of conventional polyester (e.g., PBT) compositions, aspects of the present disclosure relate to thermoplastic compositions with NMT function, low Dk and Df properties, and good mechanical performance.

The present disclosure can be understood more readily by reference to the following detailed description of the disclosure and the Examples included therein. In various aspects, the present disclosure pertains to thermoplastic compositions including: (a) from about 40 wt% to about 90 wt% of a polymer resin including poly(cyclohexylenedimethylene terephthalate) (PCT) or a copolymer thereof; (b) from about 20 wt% to about 50 wt% of a reinforcing filler including glass fiber; and (c) from about 1 wt% to about 20 wt% of an impact modifier comprising a di-block copolymer. The thermoplastic compositions are useful in consumer electronics (CE) articles, including a mobile phone or tablet, and specifically an antenna split for a mobile phone or tablet.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a reinforcing filler" includes mixtures of two or more reinforcing fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 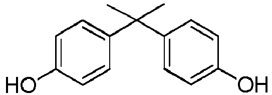 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 40 wt% to about 90 wt% of a polymer resin including PCT or a copolymer thereof; (b) from about 20 wt% to about 50 wt% of a reinforcing filler including glass fiber; and (c) from about 1 wt% to about 20 wt% of an impact modifier comprising a di-block copolymer. The combined weight percent value of all components does not exceed 100 wt%, and all weight percent values are based on the total weight of the composition.

The polymer resin including PCT or a copolymer thereof may in some aspects include PCT, polyethylene terephthalate glycol (PETG), polycyclohexylene dimethylene terephthalate glycol (PCTG), polycyclohexylene dimethylene terephthalate acid (PCTA), or a combination thereof. PCT is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA).

The glass fiber in the reinforcing filler may include round glass fiber, flat glass fiber, low Dk (dielectric constant) glass fiber, low Dk flat glass fiber, quartz fiber, or a combination thereof. In certain aspects the glass fiber is a low Dk glass fiber having a Dk less than 5.0 at 1 gigahertz (GHz) and a dissipation factor (Df) of less than 0.002 at 1 GHz. Dk and Df of the glass fiber may be determined in accordance with ASTM D150.

In some aspects the impact modifier including a di-block copolymer includes a polyolefin-acrylate copolymer. In particular aspects the polyolefin-acrylate copolymer is an ethylene-glycidyl methacrylate copolymer.

In further aspects the composition further includes from about 1 wt% to about 10 wt% of an additional impact modifier. The additional impact modifier may include, but is not limited to, an ethylene acrylate copolymer, styrene-butadiene-styrene (SBS), styrene-ethylene/1-butene-styrene block copolymer (SEBS), styrene-ethylene-propylene-styrene (SEPS), or a combination thereof.

In other aspects composition further includes from about 0.1 wt% to about 5 wt% of an additional additive. The addition additive may include, but is not limited to, a nucleation agent, a stabilizer, a mold release agent, or a combination thereof.

### Properties of Thermoplastic Compositions

Thermoplastic compositions according to aspects of the disclosure have improved properties as compared to conventional compositions. In some aspects the composition has a Df at 1.9 GHz or 5.0 GHz of less than 0.007 as determined in accordance with the SABIC Method. The SABIC Method is described in the examples.

In other aspects the composition has improved Df or Dk properties at 1.9 GHz or 5.0 GHz as determined in accordance with the SABIC Method, as compared to a comparative composition that includes polybutylene terephthalate (PBT) instead of the polymer resin comprising PCT or a copolymer thereof. In particular aspects the composition has a Dk at 1.9 GHz or 5.0 GHz that is at least 3%, or at least 4% lower, or at least 5% lower, or at least 6% lower, or at least 10% lower, or up to 20% lower, or from 3-20% lower, or from 3-10% lower, or from 3-6% lower, as compared to a comparative composition that includes PBT instead of the polymer resin comprising PCT or a copolymer thereof. In specific aspects the composition has a Df at 1.9 GHz or 5.0 GHz that is at least 15% lower, or at least 16% lower, or at least 17% lower, or at least 18% lower, or at least 20% lower, or at least 25% lower, or at least 30% lower, or from 15-30% lower, or from 15-25% lower, or from 15-20% lower, as compared to a comparative composition that includes PBT instead of the polymer resin comprising PCT or a copolymer thereof.

In certain aspects the composition has a metal bonding strength of at least 25 megapascals (MPa) as tested in accordance with ISO 19095 using a T-treatment, shear-type test at a tooling temperature of 150 degrees Celsius (°C). In further aspects the composition has a metal bonding strength of at least 26 MPa, or at least 27 MPa, or at least 28 MPa, or at least 30 MPa, or up to 40 MPa, or from 25-40 MPa, or from 25-30 MPa, as tested in accordance with ISO 19095 using a T-treatment, shear-type test at a tooling temperature of 150 degrees Celsius (°C).

In certain aspects the composition:
(a) has a higher notched Izod impact strength at either 23 °C or -20 °C as tested in accordance with ASTM D256;
(b) has a higher unnotched Izod impact strength at 23 °C, as tested in accordance with ASTM D256;
(c) has a higher flexural modulus or flexural strength at break, using a 3.2 millimeter (mm) sample at 1.27 millimeter per minute (mm/min), as tested in accordance with ASTM D790;
(d) has a higher tensile modulus or tensile strength at break, at 5 mm/min, as tested in accordance with ASTM D638; and/or
(e) has a higher heat distortion temperature at 1.82 MPa or 0.45 MPa, using a 3.2 mm sample size, as tested in accordance with ASTM D648,
as compared to a comparative composition that includes polybutylene terephthalate (PBT) instead of the polymer resin comprising PCT or a copolymer thereof.

In further aspects the composition has a lower Df at 1.9 GHz or 5.0 GHz, as determined in accordance with the SABIC Method, as compared to a comparative composition that includes an impact modifier other than the impact modifier comprising a di-block copolymer. In particular aspects the Df at 1.9 GHz or 5.0 GHz is at least 10% lower, or at least 11% lower, or at least 12% lower, or at least 15% lower, or at least 20% lower, or up to 25% lower, or from 10-25% lower, or from 10-20% lower, or from 10-15% lower, as compared to a comparative composition that includes an impact modifier other than the impact modifier comprising a di-block copolymer.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The filler(s) may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is a component of a consumer electronics (CE) article. In specific aspects the CE article is a mobile phone or tablet, such as but not limited to an antenna split for a mobile phone or tablet.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   (a) from about 40 wt% to about 90 wt% of a polymer resin comprising poly(cyclohexylenedimethylene terephthalate) (PCT) or a copolymer thereof;
   (b) from about 20 wt% to about 50 wt% of a reinforcing filler comprising glass fiber; and
   (c) from about 1 wt% to about 20 wt% of an impact modifier comprising a di-block copolymer,
   wherein the combined weight percent value of all components does not exceed 100 wt%, and all weight percent values are based on the total weight of the composition.
Aspect 2. The thermoplastic composition according to Aspect 1, wherein the polymer resin comprises PCT, polyethylene terephthalate glycol (PETG), polycyclohexylene dimethylene terephthalate glycol (PCTG), polycyclohexylene dimethylene terephthalate acid (PCTA), or a combination thereof.
Aspect 3. The thermoplastic composition according to Aspect 1 or 2, wherein the glass fiber comprises round glass fiber, flat glass fiber, low Dk (dielectric constant) glass fiber, low Dk flat glass fiber, quartz fiber, or a combination thereof.
Aspect 4. The thermoplastic composition according to Aspect 3, wherein the glass fiber is a low Dk glass fiber having a Dk less than 5.0 at 1 gigahertz (GHz) and a dissipation factor (Df) of less than 0.002 at 1 GHz, wherein Dk and Df are determined in accordance with ASTM D150.
Aspect 5. The thermoplastic composition according to any of Aspects 1 to 4, wherein the impact modifier comprising a di-block copolymer comprises a polyolefin-acrylate copolymer.
Aspect 6. The thermoplastic composition according to Aspect 5, wherein the polyolefin-acrylate copolymer is an ethylene-glycidyl methacrylate copolymer.
Aspect 7. The thermoplastic composition according to any of Aspects 1 to 6, wherein the composition further comprises from about 1 wt% to about 10 wt% of an additional impact modifier.
Aspect 8. The thermoplastic composition according to Aspect 7, wherein the additional impact modifier comprises an ethylene acrylate copolymer, styrene-butadiene-styrene (SBS), styrene-ethylene/1-butene-styrene block copolymer (SEBS), styrene-ethylene-propylene-styrene (SEPS), or a combination thereof.
Aspect 9. The thermoplastic composition according to any of Aspects 1 to 8, wherein the composition further comprises from about 0.1 wt% to about 5 wt% of an additional additive.
Aspect 10. The thermoplastic composition according to Aspect 9, wherein the additional additive comprises a nucleation agent, a stabilizer, a mold release agent, or a combination thereof.
Aspect 11. The thermoplastic composition according to any of Aspects 1 to 10, wherein the composition has a Df at 1.9 GHz or 5.0 GHz of less than 0.007 as determined in accordance with the SABIC Method.
Aspect 12. The thermoplastic composition according to any of Aspects 1 to 11, wherein the composition has improved Df or Dk properties, as determined in accordance with the SABIC Method, as compared to a comparative composition that includes polybutylene terephthalate (PBT) instead of the polymer resin comprising PCT or a copolymer thereof.
Aspect 13. The thermoplastic composition according to any of Aspects 1 to 12, wherein the composition has a metal bonding strength of at least 25 megapascals (MPa) as tested in accordance with ISO 19095 using a T-treatment, shear-type test at a tooling temperature of 150 degrees Celsius (°C).
Aspect 14. The thermoplastic composition according to any of Aspects 1 to 13, wherein the composition:
   (a) has a higher notched Izod impact strength at either 23 °C or -20 °C as tested in accordance with ASTM D256;
   (b) has a higher unnotched Izod impact strength at 23 °C, as tested in accordance with ASTM D256;
   (c) has a higher flexural modulus or flexural strength at break, using a 3.2 millimeter (mm) sample at 1.27 millimeter per minute (mm/min), as tested in accordance with ASTM D790;
   (d) has a higher tensile modulus or tensile strength at break, at 5 mm/min, as tested in accordance with ASTM D638; or
   (e) has a higher heat distortion temperature at 1.82 MPa or 0.45 MPa, using a 3.2 mm sample size, as tested in accordance with ASTM D648,
   as compared to a comparative composition that includes polybutylene terephthalate (PBT) instead of the polymer resin comprising PCT or a copolymer thereof.
Aspect 15. The thermoplastic composition according to any of Aspects 1 to 14, wherein the composition has a lower Df at 1.9 GHz or 5.0 GHz, as determined in accordance with the SABIC Method, as compared to a comparative composition that includes an impact modifier other than the impact modifier comprising a di-block copolymer.
Aspect 16. An article comprising the thermoplastic composition according to any of Aspects 1 to 15.
Aspect 17. The article of Aspect 16, wherein the article is a consumer electronics (CE) article.
Aspect 18. The article of Aspect 17, wherein the CE article is a mobile phone or tablet.
Aspect 19. The article according to any of Aspects 16 to 18, wherein the article is an antenna split for a mobile phone or tablet.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The compositions described herein were extruded with the conditions set forth in Table 1:

**Table 1 - Extrusion Profile of Comparative and Example Compositions**

| **Parameters** | **Unit** | **PBT-Based** | **PCT-Based** |
|---|---|---|---|
| Compounder Type | - | TEM-37BS | TEM-37BS |
| Barrel Size | mm | 1500 | 1500 |
| Die | mm | 4 | 4 |
| Zone 1 Temp | °C | 100 | 100 |
| Zone 2 Temp | °C | 200 | 200 |
| Zone 3 Temp | °C | 240 | 290 |
| Zone 4 Temp | °C | 240 | 290 |
| Zone 5 Temp | °C | 240 | 290 |
| Zone 6 Temp | °C | 250 | 300 |
| Zone 7 Temp | °C | 250 | 300 |
| Zone 8 Temp | °C | 250 | 300 |
| Zone 9 Temp | °C | 250 | 300 |
| Zone 10 Temp | °C | 250 | 300 |
| Zone 11 Temp | °C | 250 | 300 |
| Die Temp | °C | 260 | 300 |
| Screw speed | rpm | 200 | 200 |
| Throughput | kg/hr | 40 | 40 |
| Torque | % | 70-80 | 75-85 |
| Vacuum 1 | bar | -0.08 | -0.08 |
| Side Feeder 1 speed | rpm | 250 | 250 |
| Melt temperature | °C | 260-270 | 300-310 |

The extruded compositions were molded according to the conditions set forth in Table 2:

**Table 2 - Molding Profile of Comparative and Example Compositions**

| **Parameters** | **Unit** | **PBT-Based** | **PCT-Based** |
|---|---|---|---|
| Pre-drying time | Hour | 4 | 4 |
| Pre-drying temp | °C | 120 | 120 |
| Molding Machine | NONE | FANUC, SE180 | |
| Mold Type (insert) | NONE | ASTM Tensile, Flexural, & Izod bars 100×70×1.6 mm plaques | |
| Hopper temp | °C | 50 | 50 |
| Zone 1 temp | °C | 240 | 280 |
| Zone 2 temp | °C | 250 | 290 |
| Zone 3 temp | °C | 260 | 300 |
| Nozzle temp | °C | 250 | 290 |
| Mold temp | °C | 120 | 120 |
| Screw speed | rpm | 100 | 100 |
| Back pressure | kgf/cm² | 30 | 30 |
| Cooling time | s | 20-30 | 20-30 |
| Injection speed | mm/s | 50-100 | 50-100 |
| Holding pressure | kgf/cm² | 800-1000 | 800-1000 |
| Max. Injection pressure | kgf/cm² | 1000-1500 | 1000-1500 |

Comparative and example compositions were formed with the components set forth in Table 3. In this and other tables, content of the components is provided in weight percentage (wt%):

**Table 3 - Comparative and Example Compositions**

| **Item Description** | **C1.1** | **E1.1** | **E1.2** | **E1.3** | **E1.4** |
|---|---|---|---|---|---|
| PBT resin (CCP 1200D and 1100X) | 73.2 | | | | |
| Polycyclohexylenedimethylene terephthalate, PCT (Celanese Thermx^{®} 13787) | | 73.2 | 68.2 | 63.2 | 53.2 |
| ATOFINA Lotader^{®} AX8900 | 4 | 4 | 4 | 4 | 4 |
| Kraton SEBS, G1651 | 2 | 2 | 2 | 2 | 2 |
| CPIC low Dk glass fiber, ECS303N-3-K/HL | 20 | 20 | 25 | 30 | 40 |
| Pentaerythritol tetrastearate | 0.3 | 0.3 | 0.3 | 0.3 | 0.3 |
| 2-(2'hydroxy-5-t-octylphenyl)-benzotriazole | 0.3 | 0.3 | 0.3 | 0.3 | 0.3 |
| Hindered phenol stabilizer | 0.1 | 0.1 | 0.1 | 0.1 | 0.1 |
| Tris(2,4-di-t-butylphenyl)phosphite, Irgafos^{®} 168 | 0.1 | 0.1 | 0.1 | 0.1 | 0.1 |

Various properties of the compositions of Table 3 are provided in Table 4:

**Table 4 - Properties of Table 3 Compositions**

| **Property** | **Test Description/ Method** | **Unit** | **C1.1** | **E1.1** | **E1.2** | **E1.3** | **E1.4** |
|---|---|---|---|---|---|---|---|
| Bonding Strength | ISO 19095, T-treatment, shear type, 150 °C tooling temp | MPa | - | 26 | 26 | 26 | 27 |
| Density | ASTM D792, Specific gravity | g/cm³ | 1.396 | 1.314 | 1.345 | 1.376 | 1.453 |
| Melt volume rate (MVR) | ASTM D1238, 300 °C/2.16 kg | cm³/10m in | / | 18 | 15 | 12 | 7 |
| Notched IZOD (NII) | ASTM D256, 23 °C, 5 lbf/ft | J/m | 142 | 123 | 145 | 165 | 165 |
| | ASTM D256, -20 °C, 5 lbf/ft | J/m | 97 | 97 | 113 | 133 | 140 |
| Un-notched IZOD (UNII) | ASTM D256, 23 °C, 5 lbf/ft | J/m | 1060 | 1110 | 1150 | 1240 | 1230 |
| Heat distortion temp (HDT) | ASTM D648, 1.82 MPa/3.2 mm | °C | 205 | 207 | 212 | 217 | 236 |
| | ASTM D648, 0.45 MPa/3.2 mm | °C | 221 | 274 | 274 | 274 | >280 |
| Flexural Modulus | ASTM D790, 3.2 mm, 1.27 mm/min | MPa | 5240 | 4410 | 5210 | 6070 | 8050 |
| Flexural Strength | ASTM D790, at break, 3.2 mm, 1.27 mm/min | MPa | 164 | 151 | 163 | 175 | 193 |
| Tensile Modulus | ASTMD638,5 mm/min | MPa | 5888 | 5069 | 5995 | 7066 | 9013 |
| Tensile Strength | ASTM D638, at break, 5 mm/min | MPa | 99 | 96 | 102 | 109 | 120 |
| Tensile Elongation | ASTM D638, at break, 5 mm/min | % | 4.14 | 3.86 | 3.67 | 3.49 | 3.18 |
| Dk | 1.9 GHz, SABIC Method | - | 3.093 | 2.940 | 2.983 | 3.027 | 3.173 |
| Df | 1.9 GHz, SABIC Method | - | 0.0087 | 0.0073 | 0.0073 | 0.0072 | 0.0078 |
| Dk | 5.0 GHz, SABIC Method | - | 3.093 | 2.973 | 3.021 | 3.070 | 3.193 |
| Df | 5.0 GHz, SABIC Method | - | 0.0076 | 0.0064 | 0.0065 | 0.0065 | 0.0071 |

The Dk and Df properties of the compositions are determined in accordance with the SABIC Method, which includes measuring these values using a QWED split post dielectric resonator and an Agilent network analyzer. For the 1.9 gigahertz (GHz) measurement, the minimum sample size is 70 millimeter (mm) x 70 mm; the maximum sample thickness is 4 mm. For the 5.0 GHz measurement, the minimum sample size is 30 mm x 30 mm; the maximum sample thickness is 2 mm.

As shown in Table 4, when using the same glass fiber content in the formulation, the developed PCT-based composition (E1.1) showed much lower Dk and Df performance as compared to the PBT-based composition (C1.1). Modulus and impact strength of the PCT composition was slightly lower than the PBT composition. With glass fiber content increased to 25 wt%, the PCT-based composition (E1.2) had comparable or slightly better mechanical performance compared to the PBT-based composition. For dielectric properties the PCT-based composition had a much lower Dk and Df as compared to the control composition C1.1. As glass fiber content was increased to 30% or 40% (E1.3 and E1.4), the PCT-based compositions also had low Dk and Df properties with good mechanical performance (*e.g*., NII >160 J/m). High bonding strength is desired for NMT applications. As show in Table 4, the PCT-based compositions showed good bonding performance (>25 MPa) with aluminum after T-treatment. Typically, customer requirements for low Dk NMT products include a bonding strength of at least 23 MPa.

Additional PCT-based thermoplastic compositions were formed as shown in Table 5. The compositions included a di-block ethylene-glycidyl methacrylate (GMA) copolymer impact modifier (Lotader^{®} AX8840). Glass fiber content of the compositions was increased from 25 wt% to 45 wt%:

**Table 5 - Example Compositions**

| **Item Description** | **Unit** | **E2.1** | **E2.2** | **E2.3** |
|---|---|---|---|---|
| PCT (Celanese Thermx^{®} 13787) | % | 70.2 | 60.2 | 50.2 |
| ATOFINA Lotader^{®} AX8840 | % | 4 | 4 | 4 |
| CPIC low Dk glass fiber, ECS303N-3-K/HL | % | 25 | 35 | 45 |
| Pentaerythritol tetrastearate | % | 0.3 | 0.3 | 0.3 |
| 2-(2'hydroxy-5-t-octylphenyl)-benzotriazole | % | 0.3 | 0.3 | 0.3 |
| Hindered phenol stabilizer | % | 0.1 | 0.1 | 0.1 |
| Tris(2,4-di-t-butylphenyl)phosphite, Irgafos^{®} 168 | % | 0.1 | 0.1 | 0.1 |

Dielectric and mechanical performance of the compositions is shown in Table 6.

**Table 6 - Properties of Table 5 Compositions**

| **Typical Property** | **Test Method** | **Unit** | **E2.1** | **E2.2** | **E2.3** |
|---|---|---|---|---|---|
| Bonding Strength | ISO 19095, T-treatment, shear type, 150 °C tooling temp | MPa | 27 | 28 | 27 |
| Density | ASTM D792, Specific gravity | g/cm³ | 1.348 | 1.421 | 1.499 |
| MVR | ASTM D1238, 300 °C/2.16 kg | cm³/10 min | 19 | 13 | 5 |
| Notched IZOD | ASTM D256, 23 °C, 5 lbf/ft | J/m | 136 | 148 | 169 |
| | ASTM D256, -20 °C, 5 lbf/ft | J/m | 116 | 129 | 147 |
| Un-notched IZOD | ASTM D256, 23 °C, 5 lbf/ft | J/m | 1140 | 1190 | 1160 |
| HDT | ASTM D648, 1.82 MPa/3.2 mm | °C | 207 | 252 | 255 |
| | ASTM D648, 0.45 MPa/3.2 mm | °C | 277 | 278 | 279 |
| Flexural Modulus | ASTM D790, 3.2 mm, 1.27 mm/min | MPa | 5320 | 7200 | 9590 |
| Flexural Strength | ASTM D790, at break, 3.2 mm, 1.27 mm/min | MPa | 152 | 175 | 189 |
| Tensile Modulus | ASTMD638,5 mm/min | MPa | 6119 | 8261 | 10845 |
| Tensile Strength | ASTM D638, at break, 5 mm/min | MPa | 104 | 121 | 135 |
| Tensile Elongation | ASTM D638, at break, 5 mm/min | % | 3.54 | 3.31 | 2.91 |
| Dₖ | 1.9 GHz, SABIC Method | / | 2.977 | 3.105 | 3.223 |
| D_{f} | 1.9 GHz, SABIC Method | / | 0.0064 | 0.0064 | 0.0067 |
| Dₖ | 5.0 GHz, SABIC Method | / | 3.033 | 3.157 | 3.293 |
| D_{f} | 5.0 GHz, SABIC Method | / | 0.0057 | 0.0059 | 0.0062 |

As demonstrated in Table 6, good metal bonding strength (27-28 MPa, T-treatment) was obtained when the tooling temperature was increased to 180 °C. Comparing the compositions with the same glass fiber content, the composition of E2.1 had similar mechanical performance but a much lower Df value as compared to E1.2 (0.0064 *vs*. 0.0073 at 1.9GHz). When the glass fiber content was increased, the Df values remained low (<0.007 at 1.9GHz). The thermal and mechanical performance of the compositions was good, including high HDT, good impact and high modulus.

In summary, PCT-based compositions having good metal bonding performance, low Dk and Df properties, and good mechanical performance were formed according to aspects of the disclosure. Compositions including a di-block impact modifier had particularly good properties. The described compositions had a bonding strength with aluminum under T-treatment greater than 25 MPa and a much lower Dk and Df as compared to conventional PBT-based compositions. In general, compositions according to aspects of the disclosure had particularly low Dk and Df properties, good metal bonding strength, and good mechanical performance. Accordingly, such compositions would be especially suitable for antenna splits applications in 5G mobile phones and tablets.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
(a) from about 40 wt% to about 90 wt% of a polymer resin comprising poly(cyclohexylenedimethylene terephthalate) (PCT) or a copolymer thereof;
(b) from about 20 wt% to about 50 wt% of a reinforcing filler comprising glass fiber; and
(c) from about 1 wt% to about 20 wt% of an impact modifier comprising a di-block copolymer,
wherein the combined weight percent value of all components does not exceed 100 wt%, and all weight percent values are based on the total weight of the composition.

2. The thermoplastic composition according to claim 1, wherein the polymer resin comprises PCT, polyethylene terephthalate glycol (PETG), polycyclohexylene dimethylene terephthalate glycol (PCTG), polycyclohexylene dimethylene terephthalate acid (PCTA), or a combination thereof.

3. The thermoplastic composition according to claim 1 or 2, wherein the glass fiber comprises round glass fiber, flat glass fiber, low Dk (dielectric constant) glass fiber, low Dk flat glass fiber, quartz fiber, or a combination thereof.

4. The thermoplastic composition according to claim 3, wherein the glass fiber is a low Dk glass fiber having a Dk less than 5.0 at 1 gigahertz (GHz) and a dissipation factor (Df) of less than 0.002 at 1 GHz, wherein Dk and Df are determined in accordance with ASTM D150.

5. The thermoplastic composition according to any of claims 1 to 4, wherein the impact modifier comprising a di-block copolymer comprises a polyolefin-acrylate copolymer.

6. The thermoplastic composition according to claim 5, wherein the polyolefin-acrylate copolymer is an ethylene-glycidyl methacrylate copolymer.

7. The thermoplastic composition according to any of claims 1 to 6, wherein the composition further comprises from about 1 wt% to about 10 wt% of an additional impact modifier.

8. The thermoplastic composition according to claim 7, wherein the additional impact modifier comprises an ethylene acrylate copolymer, styrene-butadiene-styrene (SBS), styrene-ethylene/1-butene-styrene block copolymer (SEBS), styrene-ethylene-propylene-styrene (SEPS), or a combination thereof.

9. The thermoplastic composition according to any of claims 1 to 8, wherein the composition further comprises from about 0.1 wt% to about 5 wt% of an additional additive.

10. The thermoplastic composition according to claim 9, wherein the additional additive comprises a nucleation agent, a stabilizer, a mold release agent, or a combination thereof.

11. The thermoplastic composition according to any of claims 1 to 10, wherein the composition has a Df at 1.9 GHz or 5.0 GHz of less than 0.007 as determined in accordance with the SABIC Method.

12. The thermoplastic composition according to any of claims 1 to 11, wherein the composition has improved Df or Dk properties, as determined in accordance with the SABIC Method, as compared to a comparative composition that includes polybutylene terephthalate (PBT) instead of the polymer resin comprising PCT or a copolymer thereof.

13. The thermoplastic composition according to any of claims 1 to 12, wherein the composition has a metal bonding strength of at least 25 megapascals (MPa) as tested in accordance with ISO 19095 using a T-treatment, shear-type test at a tooling temperature of 150 degrees Celsius (°C).

14. The thermoplastic composition according to any of claims 1 to 13, wherein the composition has a lower Df at 1.9 GHz or 5.0 GHz, as determined in accordance with A the SABIC Method, as compared to a comparative composition that includes an impact modifier other than the impact modifier comprising a di-block copolymer.

15. An article comprising the thermoplastic composition according to any of claims 1 to 14, wherein the article is an antenna split for a mobile phone or tablet.
